(19) Europäisches Patentamt
European Patent Office
Office européen des brevets

(11) **EP 4 102 413 A1**

(12) **EUROPEAN PATENT APPLICATION**

(43) Date of publication:
**14.12.2022 Bulletin 2022/50**

(21) Application number: **21178853.4**

(22) Date of filing: **10.06.2021**

(51) International Patent Classification (IPC):
**G06N 5/00** (2006.01)  **G06N 20/00** (2019.01)
**G06N 3/00** (2006.01)  **G06N 3/08** (2006.01)
**G06N 7/00** (2006.01)

(52) Cooperative Patent Classification (CPC):
**G06N 20/00; G06N 5/003;** G06N 3/006; G06N 3/08;
G06N 7/005

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Volvo Autonomous Solutions AB
405 08 Göteborg (SE)**

(72) Inventor: **HELLGREN, Jonas
413 16 GÖTEBORG (SE)**

(74) Representative: **Kransell & Wennborg KB
P.O. Box 2096
403 12 Göteborg (SE)**

Remarks:
Amended claims in accordance with Rule 137(2)
EPC.

(54) **METHOD AND DEVICE FOR TUNING A HYPERPARAMETER OF A MACHINE-LEARNING ALGORITHM**

(57)     A computer-implemented method (100) of managing a machine-learning, ML, algorithm (P) which is dependent on one or more hyperparameters is described. The method comprises: providing (110) a plurality of instances of the ML algorithm using different values ($h_j, j = 1, ...,J$) of the hyperparameters; obtaining (112) a plurality of input states ($x_k, k = 1, ..., K$); mapping (114) each predefined input ($x_k$) to a plurality of outputs ($y_{j,k} = P(x_k; h_j)$) using the instances of the ML algorithm; evaluating (116) a predefined quality metric ($\mu$) for the outputs; and on the basis of statistics ($S\{\mu(y_{j,1}), \mu(y_{j,2}),..., \mu(y_{j,K})\}$) of the quality metric for the outputs, selecting (118) at least one instance of the ML algorithm for continued use. In some embodiments, a technical system is controlled using one primary instance of the ML algorithm. If the selected instance of the ML algorithm is not the primary instance, the primary instance may optionally be replaced (120) by the selected instance.

Fig. 4

EP 4 102 413 A1

## Description

## TECHNICAL FIELD

The present disclosure relates to the field of machine learning (ML) and in particular to a method for tuning one or more hyperparameters of an ML algorithm.

## BACKGROUND

EP3748551 discloses a method for configuring a hyperparameter h of a computer program, wherein more precisely the program is designed to solve an optimization problem using an optimization algorithm and is parameterized with respect to the hyperparameter $h$. The method maps a state s (input) to an action $a$ (output) according to a predefined policy $\pi$ and then sets the hyperparameter $h$ in such manner that the optimization algorithm mimics this mapping. The policy $\pi$, which can be a lookup table or a neural network, does not depend on any hyperparameter.

The method according to EP3748551 can only be applied to such optimization algorithms which can be parameterized with respect to the hyperparameter $h,$ so as to be (approximately) invertible in $h$ for constant state s, which limits its use to rather few practical situations.

## SUMMARY

One objective of the present disclosure is to make available methods and devices for hyperparameter tuning in an ML algorithm which are more generally applicable. It is a particular objective to propose such methods and devices that do not require the ML algorithm to be parameterizable. A further objective is to propose such methods and devices with an increased ability to find a global optimum of the hyperparameter. A still further objective is to propose such methods and devices which adapt the ML algorithm to a variety of operational situations. Finally, the present disclosure aims to make available hyperparameter tuning techniques that can be applied to automated traffic planning, including the centralized control of a plurality of vehicles.

At least some of these objectives are achieved by the invention defined by the independent claims. The dependent claims relate to advantageous embodiments of the invention.

In a first aspect of the invention, there is provided a computer-implemented method of managing an ML algorithm $P$ which is dependent on one or more hyperparameters. According to the method, a plurality of instances of the ML algorithm using different values $h_j, j = 1, ...,J,$ of the hyperparameters are provided, wherein $h_j$ may be a scalar or vector. A plurality of input states $x_k,$ $k = 1, ..., K,$ are obtained, e.g., from random sampling, simulation, measurement, estimation. Each input state $x_k$ is mapped to a plurality of outputs $y_{j,k} = P(x_k; h_j)$ using the J instances of the ML algorithm. A predefined quality

metric $\mu$ is evaluated for each of the outputs $y_{j,k}$. Finally, statistics S$\{\mu(y_{j,1}), \mu(y_{j,2}), ..., \mu(y_{j,K})\}$ of the quality metric for the outputs are computed and used as a basis for selecting at least one instance of the ML algorithm for continued use. More precisely, if the $j_0$th statistics is found to be superior to the others, this suggests that $h_{j_0}$ is the better performing value of the hyperparameter, and the corresponding instance of the ML algorithm should be preferred. The "continued use" may refer to a practical or operational application of the ML algorithm, e.g., to control a technical system, which may begin after an initial offline execution (or dry run) dedicated to the hyperparameter tuning.

As used in this disclosure, a "hyperparameter" is a parameter controlling the ML algorithm's learning process, including deep learning or reinforcement learning. It may be a learning rate, a discount factor (relating to reward), a parameter affecting convergence rate, probability of fallback to taking a random action, or the like. Neural network weights, parameters relating to the decision-making of the ML algorithm and other parameters representing the knowledge which the ML algorithm has acquired by the training are not hyperparameters in the sense of the present disclosure.

A "quality metric" may relate to revenue, productivity, uptime, operating cost, energy consumption, battery degradation, hardware wear or similar factors, or a combination of these. Needless to say, it is desirable to maximize some of these metrics (e.g., revenue) and to minimize others (e.g., cost).

As used herein, finally, a "statistic" $S$ of the quality metric is a quantity calculated from the values $\mu(y_{j,k}),$ $1 \le k \le K,$ which characterizes an aspect in the sample. Example statistics are average, central tendency, standard deviation, variance, variation coefficient, $\alpha$-quantile $(0 < \alpha < 1),$ minimum, maximum and peak-to-average ratio.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

The above method according to the first aspect of the invention achieves the first objective since no assumption is made regarding the ML algorithm $P$ other than the fact that it maps an input to an output. The method therefore is applicable to a broad range of algorithms. In particular, no parameterization with respect to $h$ is required.

Further, since multiple instances of the ML algorithm ($J \ge 2$) are executed (e.g., in parallel), each with a different hyperparameter value, the totality of the hyperparameter domain can be efficiently covered. This increases the chances of finding the global optimum. A method which instead probes the hyperparameter domain based on single samples (e.g., gradient descent) might get stuck in local minima or maxima.

In particular embodiments within the first aspect of the invention, a predefined minimum spread of the different values $h_j, j = 1, ...J$, of the hyperparameters is ensured. For example, if the hyperparameter values are sampled at random, the sampling may be repeated until all the values are separated by a predefined least distance (which may for instance be measured as the $L^2$ norm in hyperparameter space). An alternative criterion may be that the convex hull shall have a predefined least diameter or a predefined least measure. Enforcing a minimum spread of the hyperparameter values helps explore the hyperparameter domain more efficiently and may increase the likelihood of finding the global optimum in a limited number of iterations.

In some embodiments, one instance of the ML algorithm (primary instance) it utilized to control a technical system and the remaining $J - 1$ instances are operated in a hot-standby mode. If a different instance than the primary instance is selected based on the statistics of the quality metric, then said different instance may succeed the primary instance as the one controlling the technical system.

In a second aspect of the invention, a device for performing the above method is provided. In addition to processing circuitry configured to perform the steps of the method, the device may include an interface adapted for controlling a technical system.

On a general level, the second aspect shares the advantages of the first aspect, and it can be implemented with a corresponding degree of technical variation.

The invention further relates to a computer program containing instructions for causing a computer to carry out the above method. The computer program may be stored or distributed on a data carrier. As used herein, a "data carrier" may be a transitory data carrier, such as modulated electromagnetic or optical waves, or a nontransitory data carrier. Non-transitory data carriers include volatile and non-volatile memories, such as permanent and non-permanent storage media of magnetic, optical or solid-state type. Still within the scope of "data carrier", such memories may be fixedly mounted or portable.

## BRIEF DESCRIPTION OF THE DRAWINGS

Aspects and embodiments are now described, by way of example, with reference to the accompanying drawings, on which:

figure 1 is a flowchart of a method according to the invention;

figure 2 shows a device suitable for controlling a plurality of vehicles;

figure 3 is a schematical representation of a road network with numbered waypoints; and

figure 4 illustrates data flows during execution of the method shown in figure 1; and

figure 5 is a plot of values of a quality metric for different hyperparameter settings.

## DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

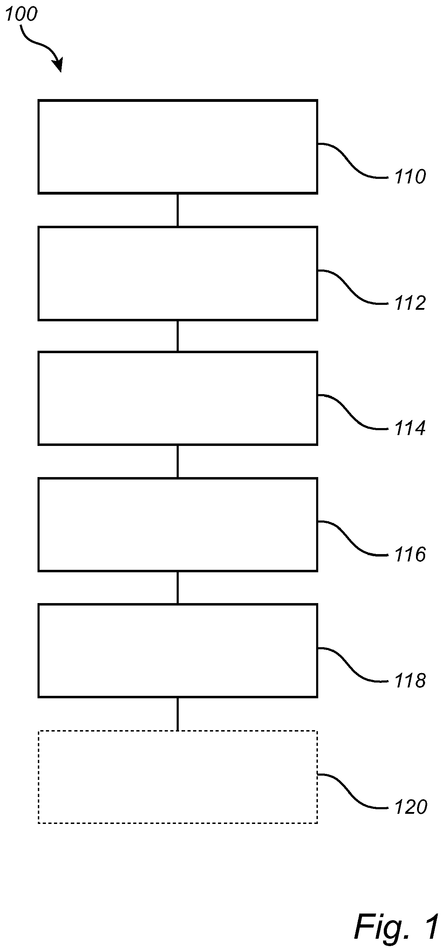

Figure 1 is a flowchart of a method 100 of managing a machine-learning (ML) algorithm $P$ which is dependent on one or more hyperparameters, according to embodiments of the invention.

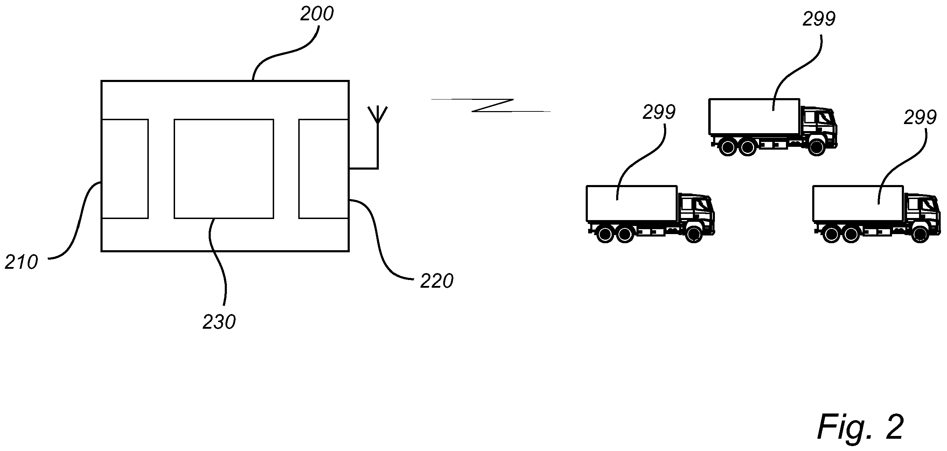

The method 100 may be executed by a general-purpose computer or, in particular, by a device 200 of the type illustrated in figure 2. The device 200 includes a control interface 210 configured to interact with an operator, a communication interface 220 for interacting with a technical system, which is here exemplified as a plurality of vehicles 299, and processing circuity 230 configured to perform the steps of the method 100 to be described. Through the control interface 210, the operator may review, enter or upload computer-readable instructions relating to the ML algorithm, as well as missions and other desirables to be carried out by the technical system. Further, the operator may perform system maintenance, manage software versions and the like. The communication interface 220 may be a wired or wireless interface, in direct or indirect communication with the technical system. In the case of a fleet of vehicles 299, which could move over a large geographical area, the communication may proceed via a cellular network, such as 3GPP LTE or 3GPP NR, or a non-cellular network, including networks according to the IEEE 802.11 specification series. The processing circuitry 230 may include one or more processors and a memory for storing software, control data, output data, execution logs etc. The processing circuitry 230 may, at least in part, be a networked (cloud) processing resource.

In a first step 110 of the method 100, a plurality of instances of the ML algorithm using different values $h_j, j = 1, ...J$, of the hyperparameters are provided. A scalar- or vector-valued hyperparameter $h_j$ may represent a

learning rate, a discount factor (relating to reward), a parameter affecting convergence rate or the like. The values $h_j, j$ = 1, ...,$J$ may be provided by a random or quasi-random sampling, which may be modified based on knowledge obtained from a foregoing iteration of the method steps. Providing an instance of the ML algorithm may include creating a data structure, reserving memory space, instantiating an object or the like, wherein the value $h_j$ is applied. It may further include training the ML algorithm, wherein the training is in accordance with $h_j$ as regards learning rate, discount factor, convergence etc.

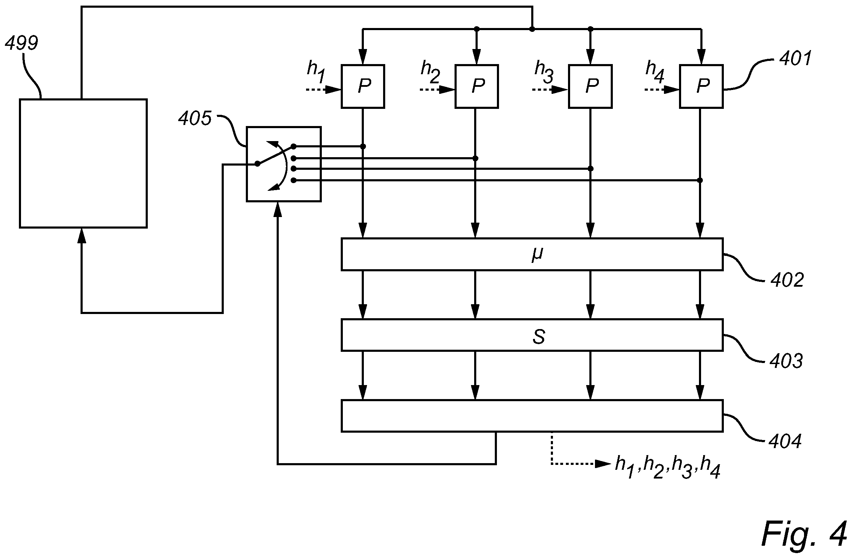

In a second step 112 of the method 110, a plurality of input states $x_k$, $k$ = 1, ..., $K$, are obtained. The input states may be obtained by random sampling (e.g., in offline hyperparameter tuning), simulation of a technical system (e.g., in a testing phase), measurement by reading one or more sensors associated with the technical system, or estimation by processing one or more such sensor readings (e.g., during operation, as discussed below with reference to figure 4). The random sampling may be from a distribution expected to reflect the future operation of the technical system, or from multiple distributions reflecting as the mix of operational situations. The estimation may apply suitable filtering, such as Kalman filtering. If the ML algorithm is to be used for the controlling of a fleet of vehicles, an input state $x_k$ may indicate the planning nodes occupied by the vehicles, and the input states $x_k$ may be sampled from one or more probability distributions modeling respective types of driving missions to be assigned.

In a next step 114, each input state $x_k$ is mapped to a plurality of outputs $y_{j,k} = P(x_k; h_j)$ using the $J$ instances of the ML algorithm. In cases where the ML algorithm is a neural network, this includes applying the input state and reading the output of the network.

In a fourth step 116 of the method 100, a predefined quality metric $\mu$ is evaluated for each of the outputs $y_{j,k}$. The quality metric $\mu$ may be revenue, productivity, uptime, operating cost, energy consumption, battery degradation, hardware wear or similar factors, or a combination of these. For a vehicle fleet, the quality metric $\mu$ may represent a payload quantity, payload-distance, passenger-distance, passengers per unit distance/time, a customer satisfaction indicator (e.g., percentage of on-time delivery of goods), a safety indicator (e.g., incidence of near-collisions), a driving economy indicator (e.g., speed variability, steering-angle variability, energy consumption) etc. In particular the difference of revenue and cost may be used.

The quality metric may depend directly on the output $y_{j,k}$. It may furthermore depend on the evolution of the technical system which occurs when the output $y_{j,k}$ is applied as a control signal. In this case, the evaluating step 116 includes controlling the technical system on the basis of the output $y_{j,k}$, as decided by the ML algorithm, when the system is in the input state $x_k$ and determining how the technical system evolves. The evolution may be determined by running a computer simulation of the technical system or performing measurements on the technical system in operation. In the case of a vehicle fleet, a sequence of motion control commands corresponding to the output $y_{j,k}$ may be applied to the vehicles and the resulting end state of the fleet and/or the intervening vehicle movements may be recorded. The evolution of the vehicle fleet may be determined by computer simulation, a physical simulation (e.g., using a scale model), or by operating the actual vehicles.

In a next step 118, statistics $S\{\mu(y_{j,1}), \mu(y_{j,2}), ..., \mu(y_{j,K})\}$ of the quality metric for the outputs are computed and used as a basis for selecting at least one instance of the ML algorithm for continued use. A statistic $S$ of the quality metric may be a quantity calculated from the metric of the outputs $y_{j,1}, y_{j,2}, ..., y_{j,K}$, such as average, standard deviation, variance, variation coefficient, $\alpha$-quantile $(0 < \alpha < 1)$, minimum, maximum and peak-to-average ratio. For example, the average may be calculated as

$$S = \frac{1}{K} \sum_{k}^{K} \mu(y_{j,k}).$$

(Optionally, the averaging is performed over $K(j) \leq K$ terms, that is, even if some instances of the ML algorithm do not produce an output for all $K$ input states, the evaluation may still be performed on the basis of statistics which for those instances are based on $K(j) < K$ outputs only.) Accordingly, step 118 may include a comparison of input state values mapped under compositions of the form $S \circ \mu \circ P$. Here, where $P$ depends parametrically on the hyperparameter $h_j$ in the sense that a learning phase has been in accordance with $h_j$.

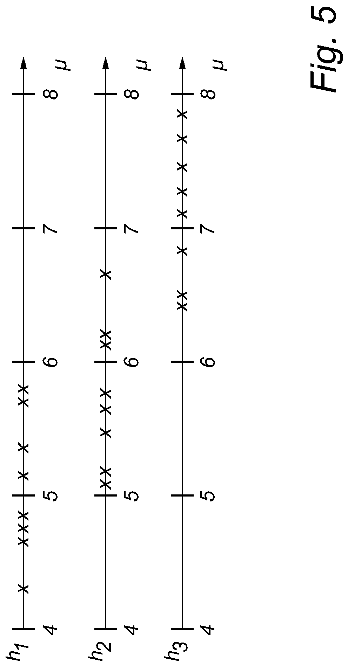

To illustrate steps 116 and 118, reference is made to figure 5, which is a plot of values of a quality metric $\mu$ for three different hyperparameter settings $h_1$ $h_2$, $h_3$. A realistic case may include significantly more values than those plotted in figure 5. The different settings produce subtly different variability and distribution. The respective averages differ visibly, wherein $h_1$ is lowest and $h_3$ is highest; which one is most suitable depends on the nature of the quality metric $\mu$, i.e., whether it represents revenue or cost. The suitability may also be judged based on the minimum or maximum (indicative of worst-case outcomes) or other statistics.

In step 118, "continued use" may refer to the application to the technical system to be controlled. It may as well refer to a next iteration of the steps of the method 100, which are then repeated after adjusting the values $h_j, j$ = 1, ...,$J$, of the hyperparameters in view of any conclusions drawn from the statistics. For this next iteration, the same input states $x_k$, $k$ = 1, ..., $K$, may be used (i.e., no repetition of step 112), or different/modified ones are used.

The step 118 may further include modifying the values of the hyperparameters that are to be used in the instances of the ML algorithm in the next iteration may be modified to be more similar to (to approach) those of the selected instance $h_{j_0}$. The modification may be as follows:

$$ h_j \mapsto h_j + \kappa\left(h_{j_0} - h_j\right), \qquad j \neq j_0, $$

where $0 < \kappa < 1$ represents a tunable a control gain. If the hyperparameter space is multidimensional, this operation may be applied to some or all of its components. This may optionally be accompanied by a step to ensure a predefined minimum spread of the modified hyperparameter values. For example, if one component is subjected to the approaching operation above, the remaining components maybe modified by addition of (independently sampled) random numbers, so as to ensure that the hyperparameter space is efficiently explored in the next iteration. A criterion for the spread may be based on statistics for the mutual spacing of the hyperparameter values or on properties of their convex hull, as explained in detail above.

In one embodiment, the step 118 is not succeeded by a new iteration in search of a more suitable hyperparameter value, but instead by a step 120 of replacing a primary instance of the ML algorithm with the instance which was selected in step 118. As used in this description, the "primary instance" of the ML algorithm is that instance which is used to control a technical system.

Figure 4 illustrates in functional block-diagram form the execution of method 100 according to this embodiment. The processor executing the method 100 does not necessarily have this internal structure. A technical system 499 is provided. Current state information, such as sensor readings, is provided to multiple instances 401 of the ML algorithm $P$ (e.g., planners), associated with respective hyperparameter values $h_1$, $h_2$, $h_3$, $h_4$. Each instance 401 is configured to perform decision-making that produces, in accordance with past training, an output which is suitable for the current state of the system 499. The output of one of the instances of the ML algorithm - a control signal - is actually applied to the technical system 499, depending on the position of the notional switch 405. In figure 4, the leftmost instance of the ML algorithm (for which $h_1$ applies) is the primary instance; the remaining three instances (for which $h_2$, $h_3$, $h_4$ apply) may be said to be operated in hot standby mode. Hot standby mode, or hot spare mode, implies a readiness to serve as the primary instance at all times. Operation in hot standby mode, according to a general definition, may include mimicking relevant aspects of the master instance's behavior; this is ensured in the arrangement of figure 4 by feeding the state information from the technical system 499 to all four instances, so that they perform decision-making on this basis (rather than, say, the state which would result if its own output was applied). This way, the hot-standby instances will have an internal state that is identical - or identical in relevant parts - to that of the primary instance, allowing the former to assume the duties of the latter in a seamless manner.

A quality metric module 402 maps the outputs from the respective instances of the ML algorithm in accordance with a predefined quality metric $\mu$. Downstream of this, a statistics module 403 computes statistics relating to each of the instances of the ML algorithm. The statistics may be a moving quantity, such as a moving average, moving median or moving variance, which reflects the performance of each ML algorithm instance in the recent past, e.g., a window of fixed length. Alternatively, the quality metric module 402 or statistics module 403 includes a buffer configured to store the values relating to an ongoing operation episode, wherein the statistics module 403 is configured to compute the statistics once a sufficient quantity of data has accumulated. A selection module 404 downstream thereof is configured to select that instance of the ML algorithm which performs best in view of the statistics, and to update the position of the switch 405 accordingly. It is recalled that figure 4 is for illustration purposes only, and the present invention is not limited to implementations actually including a switch 405.

An optional further functionality of the selection module 404 is to generate updated values of the hyperparameter values in view of the statistics of the quality metric. The updated values of the hyperparameter values may be used to provide a new set of instances of the ML algorithm, and training may be performed in accordance with these. It is noted that the option of taking the hyperparameter value $h_{j_0}$ from the best-performing instance of the ML algorithm $P$ and conceptually assigning it to the primary instance is normally not available. Indeed, a hyperparameter controls the learning process of an instance the ML algorithm and might have no influence on that instance's decision-making unless training is re-run or resumed.

A still further optional functionality of the selection module 404 is to operate the switch 405 in such manner that the primary instance of the ML algorithm is replaced in case of an execution failure detected at runtime.

It is noted that the arrangement in figure 4 may alternatively be used for the purpose of offline hyperparameter tuning, wherein the technical system 499 is replaced with a computer simulation of the technical system 499. The simulation may be initialized with a random value.

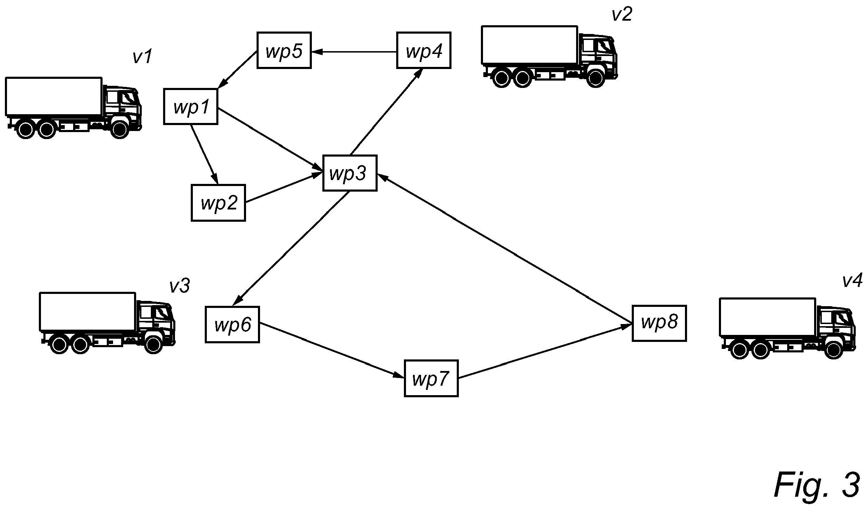

With reference to figure 3, there will now follow a description of a technical system to which hyperparameter tuning techniques disclosed herein may be applied. Figure 3 is a schematic representation of a road network, in which waypoints are defined at the road junctions wp1, wp3 and additionally at some intermediate locations wp2, wp4, wp5, ..., wp8. Some of the intermediate locations may correspond to so-called absorption nodes, where a visiting vehicle is required to dwell for a predetermined or variable time, for purposes of loading, unloading, maintenance etc. The arrangement of the waypoints is not essential to the present invention, rather their location and number may be chosen as deemed necessary in each use case to achieve smooth and efficient traffic control. The waypoints are treated as planning nodes which are shared by a plurality of vehicles v1, v2, v3, v4. Abstractly, a planning node may be understood as a logical entity which is either free or occupied by exactly one vehicle at a time. An occupied node is not consumed but can be released for use by the same or another vehicle. Planning nodes may represent physical space for transport or parking, a communication channel, maintenance machinery, additional equipment for optional temporary use, such as tools or trailers.

The vehicles v1, v2, v3, v4 maybe trucks, buses or construction equipment. Each vehicle can be controlled by an individual control signal, which may indicate a command chosen from a finite set of predetermined commands. If the vehicles are autonomous, the control signal may be a machine-oriented signal which controls actuators in the vehicle; if the vehicles are conventional, the control signals may be human-intelligible signals directed to their drivers. It is understood that individual control signals may be multiplexed onto a common carrier. A predefined command may represent an action to be taken at the next waypoint (e.g., continue straight, continue right, continue left, stop), a next destination, a speed adjustment, a loading operation or the like. Implicit signaling is possible, in that a command has a different meaning depending on its current state (e.g., toggle between an electric engine and a combustion engine, toggle between high and low speed, drive/wait at the next waypoint). A vehicle/driver which receives no control signal or a neutrally-valued control signal may be configured/instructed to continue the previously instructed action or to halt. The predetermined commands preferably relate to tactical decision-making, which corresponds to a time scale typically shorter than strategic decision-making and typically longer than operational (or machine-level) decision-making. Different vehicles may have different sets of commands.

An ML algorithm of the type which method 100 or device 200 targets can be used for centralized control of the vehicles v1, v2, v3, v4. The vehicles v1, v2, v3, v4 are to be controlled as a group, with mutual coordination. The mutual coordination may entail that any planning node utilization conflicts which could arise between pairs of vehicles are deferred to the ML algorithm and resolved at the planning stage. The planning may aim to maximize productivity, such as the total quantity of useful transport system work or the percentage of on-schedule deliveries of goods. The planning may additionally aim to minimize cost, including fuel consumption, battery wear, mechanical component wear or the like. These aims may overlap with those measured by the quality metric $\mu$.

To illustrate the decision-making in the planning phase, the planning node utilization conflicts that may arise will be briefly illustrated. The node occupancies (input state) shown in figure 3 can be expressed as

$$O\begin{pmatrix} v1 \\ v2 \\ v3 \\ v4 \end{pmatrix} = \begin{pmatrix} wp1 \\ wp4 \\ wp6 \\ wp8 \end{pmatrix}.$$

Here, no vehicle blocks any other vehicle. It can also be seen that these node occupancies provide each vehicle with a next waypoint to which it can move in a next epoch. The choice is not arbitrary, however, as both vehicles v1 and v4 may theoretically move to waypoint wp3, but this conflict can be avoided by routing vehicle v1 to waypoint wp2 instead. If the system is evolved in this manner, that is, into

$$O\begin{pmatrix} v1 \\ v2 \\ v3 \\ v4 \end{pmatrix} = \begin{pmatrix} wp2 \\ wp5 \\ wp7 \\ wp3 \end{pmatrix},$$

then vehicle v4 will block vehicle v1 from moving. This blocking state temporarily reduces the vehicle system's productivity but will be resolved once vehicle v4 continues to waypoint wp4. It is easy to realize that the difficulty of the blocking states (as measured, say, by the number of vehicle movements needed to reach a non-blocking state) in a given waypoint topology will increase with the number of vehicles present. The efficiency gain of deploying many vehicles may therefore be consumed by the increased risk of conflicts. A waypoint topology populated with many vehicles may also include deadlock states, where no vehicle movement is possible at all. This may correspond to a real-life scenario where the controlled vehicles need external help to resume operation, such as operator intervention, towing etc.

A model of the vehicle system in figure 3 may be defined under an assumption of discrete time, that is, the traffic system evolves in evenly spaced epochs. The length of an epoch maybe of the order of 0.1 s, 1 s, 10 s or longer. At each epoch, either a command a1, a2 is given to one of the vehicles v1, v2, v3, v4, a command is given to a predefined group of vehicles, or no command is given. Quasi-simultaneous commands v1.a1, v2.a1 to two vehicles v1, v2 or two vehicle groups can be distributed over two consecutive epochs. To allow approximate simultaneity, the epoch length may be configured shorter than the typical time scale of the tactical decision-making for one vehicle.

Within the scope of the present disclosure, the ML algorithm for controlling the vehicle system of figure 3 can be provided in a multitude of ways. A straightforward possible planning approach may be to perform training while assigning a rule-based reward score to each planning outcome, wherein the ML algorithm is trained to select the most beneficial one. The assignment of the reward may include simulating the movement of the vehicles which will result from applying that sequence of motion commands. The reward may be a function of the vehicles' positions at the planning horizon and/or of the sequence of vehicle movements by which they reach these positions. The trained part of the ML algorithm (e.g., an artificial neural network) may be supplemented by planning heuristics to accelerate the search for an acceptable solution. The planning heuristics may help identify, on an early stage, such sequences of commands that are less promising and exclude them from further consideration. An example planning heuristic is to remove vehicles from potentially blocking positions without delay. The ML algorithm may be trained to propose the most suitable action (i.e., command sequence) for a given input state.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

**Claims**

1. A computer-implemented method (100) of managing a machine-learning, ML, algorithm ($P$) which is dependent on one or more hyperparameters, the method comprising:

   providing (110) a plurality of instances of the ML algorithm using different values ($h_j$, $j$ = 1, ... ,$J$) of the hyperparameters;
   obtaining (112) a plurality of input states ($x_k$, $k$ = 1,..., $K$);
   mapping (114) each input state ($x_k$) to a plurality of outputs ($y_{j,k} = P(x_k; h_j)$) using the instances of the ML algorithm;
   evaluating (116) a predefined quality metric ($\mu$) for the outputs; and
   on the basis of statistics ($S\{\mu(y_{j,1}), \mu(y_{j,2}), ..., \mu(y_{j,K})\}$) of the quality metric for the outputs, selecting (118) at least one instance of the ML algorithm for continued use.

2. The method of claim 1, wherein the hyperparameters include one or more of:
   learning rate, discount factor, parameters affecting convergence rate, probability of fallback to taking a random action.

3. The method of claim 1 or 2, wherein said selecting includes modifying the values of the hyperparameters, which are used in the instances of the ML algorithm, to be more similar to those of the selected instance, and repeating the mapping and evaluating steps.

4. The method of claim 3, wherein said selecting includes ensuring a least spread of the modified values of the hyperparameters, which are used in the instances of the ML algorithm.

5. The method of any of the preceding claims, wherein the quality metric relates to at least one of: revenue, productivity, uptime, operating cost, energy consumption, battery degradation, hardware wear.

6. The method of any of the preceding claims, wherein said selecting is based on comparing averages of the quality metric across the instances of the ML algorithms.

7. The method of any of the preceding claims, wherein one primary instance, from said plurality of instances of the ML algorithm, is utilized to control a technical system (499) and the remaining instances are operated in a hot standby mode, and wherein the input states are obtained by identifying or estimating states of the technical system,
   the method further comprising replacing (120) the primary instance by the selected instance of the ML algorithm.

8. The method of any of the preceding claims, further comprising:
   using the selected instance of the ML algorithm in a traffic planning method for controlling a plurality of vehicles (v1, v2, v3, v4), wherein each vehicle occupies one node in a shared set of planning nodes (wp1, wp2, wp3, wp4, wp5, wp6, wp7, wp8) and is movable to other nodes along predefined edges between pairs of the nodes in accordance with a finite set of motion commands (v1.a1, v1.a2, v2.a1, v2.a2).

9. The method of claim 8, wherein the vehicles are autonomous vehicles.

10. A device (200) configured to manage a machine-learning, ML, algorithm ($P$) which is dependent on one or more hyperparameters, the device comprising processing circuitry (230) configured to execute the method of any of the preceding claims.

11. The system of claim 10, further comprising an interface (220) configured to control a technical system.

12. A computer program comprising instructions which, when executed, cause the device of claim 10 to execute the method of any of claims 1 to 9.

**Amended claims in accordance with Rule 137(2) EPC.**

1. A computer-implemented method (100) of managing a machine-learning, ML, algorithm (P) which is dependent on one or more hyperparameters, the method comprising:

   providing (110) a plurality of instances of the ML algorithm using different values ($h_j$, $j$ = 1, ...,$J$) of the hyperparameters, wherein one primary instance, from said plurality of instances of the ML algorithm, is utilized to control a technical system (499) and the remaining instances are operated in a hot standby mode;
   obtaining (112) a plurality of input states ($x_k$, $k$ = 1, ..., $K$) by identifying or estimating states of the technical system;
   mapping (114) each input state ($x_k$) to a plurality of outputs ($y_{j,k}$ = $P(x_k; h_j)$) using the instances of the ML algorithm;
   evaluating (116) a predefined quality metric ($\mu$) for the outputs;
   on the basis of statistics (S{$\mu(y_{j,1})$, $\mu(y_{j,2})$, ..., $\mu(y_{j,K})$}) of the quality metric for the outputs, selecting (118) at least one instance of the ML algorithm for continued use; and
   replacing (120) the primary instance of the ML algorithm by the selected instance of the ML algorithm.

2. The method of claim 1, wherein the ML algorithm is a deep learning or reinforcement learning algorithm, and the hyperparameters include one or more of: learning rate, discount factor, parameters affecting convergence rate, probability of fallback to taking a random action.

3. The method of claim 1 or 2, wherein said selecting includes modifying the values of the hyperparameters, which are used in the instances of the ML algorithm, to be more similar to those of the selected instance, and repeating the mapping and evaluating steps.

4. The method of claim 3, wherein said selecting includes ensuring a least spread of the modified values of the hyperparameters, which are used in the instances of the ML algorithm.

5. The method of any of the preceding claims, wherein the quality metric relates to at least one of the following quantities for the technical system: revenue, productivity, uptime, operating cost, energy consumption, battery degradation, hardware wear.

6. The method of any of the preceding claims, wherein said selecting is based on comparing averages of the quality metric across the instances of the ML algorithms.

7. The method of any of the preceding claims, wherein:

   the technical system is a plurality of vehicles (v1, v2, v3, v4), wherein each vehicle occupies one node in a shared set of planning nodes (wp1, wp2, wp3, wp4, wp5, wp6, wp7, wp8) and is movable to other nodes along predefined edges between pairs of the nodes in accordance with a finite set of motion commands (v1.a1, v1.a2, v2.a1, v2.a2);
   the input state ($x_k$) indicates the planning nodes occupied by the vehicles;
   the output ($y_{j,k}$) corresponds to a sequence of motion control commands to be applied to the vehicles; and
   the selected instance of the ML algorithm is used in a traffic planning method for controlling said plurality of vehicles.

8. The method of claim 7, wherein the vehicles are autonomous vehicles.

9. A device (200) configured to manage a machine-learning, ML, algorithm (P) which is dependent on one or more hyperparameters, the device comprising processing circuitry (230) configured to execute the method of any of the preceding claims and an interface (220) configured to control a technical system (499).

10. A computer program comprising instructions which, when executed, cause the device of claim 9 to execute the method of any of claims 1 to 8.

100

110

112

114

116

118

120

*Fig. 1*

*Fig. 2*

*Fig. 3*

Fig. 4

*Fig. 5*

Europäisches
Patentamt
European
Patent Office
Office européen
des brevets

# EUROPEAN SEARCH REPORT

Application Number

EP 21 17 8853

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEX FRIDMAN ET AL: "DeepTraffic: Crowdsourced Hyperparameter Tuning of Deep Reinforcement Learning Systems for Multi-Agent Dense Traffic Navigation", ARXIV.ORG, CORNELL UNIVERSITY LIBRARY, 201 OLIN LIBRARY CORNELL UNIVERSITY ITHACA, NY 14853, 9 January 2018 (2018-01-09), XP081014201, | 1-12 | INV. G06N5/00 G06N20/00 G06N3/00 G06N3/08 G06N7/00 |
| Y | Sections 1 - 5; * abstract; figure 1; table 1 * | 3,4 | |
| X | GREG HEINRICH ET AL: "Metaoptimization on a Distributed System for Deep Reinforcement Learning", ARXIV.ORG, CORNELL UNIVERSITY LIBRARY, 201 OLIN LIBRARY CORNELL UNIVERSITY ITHACA, NY 14853, 7 February 2019 (2019-02-07), XP081026536, | 1,3,4, 10,12 | |
| A | Sections 1 - 4.1; * abstract * | 2,5-9,11 | |
| Y,D | EP 3 748 551 A1 (BOSCH GMBH ROBERT [DE]) 9 December 2020 (2020-12-09) | 3,4 | TECHNICAL FIELDS SEARCHED (IPC)<br><br>G06N |
| A | * paragraph [0020] - paragraph [0023]; claims 1, 3-5, 7 * | 1,2,5-12 | |
| X | TOM LE PAINE ET AL: "Hyperparameter Selection for Offline Reinforcement Learning", ARXIV.ORG, CORNELL UNIVERSITY LIBRARY, 201 OLIN LIBRARY CORNELL UNIVERSITY ITHACA, NY 14853, 17 July 2020 (2020-07-17), XP081723054, | 1,10,12 | |
| A | Sections 1 - 2; * abstract * | 2-9,11 | |

-/--

The present search report has been drawn up for all claims

| Place of search | Date of completion of the search | Examiner |
|---|---|---|
| Munich | 29 October 2021 | Baudino, A |

page 1 of 2

Europäisches
Patentamt

European
Patent Office

Office européen
des brevets

## EUROPEAN SEARCH REPORT

Application Number

EP 21 17 8853

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAMES BERGSTRA ET AL: "Random Search for Hyper-Parameter Optimization", JOURNAL OF MACHINE LEARNING RESEARCH, vol. 13, 1 February 2012 (2012-02-01), pages 281-305, XP055293358, Sections 1 - 2.1; | 1,10,12 | |
| A | * abstract * | 2-9,11 | |

-----

TECHNICAL FIELDS
SEARCHED        (IPC)

The present search report has been drawn up for all claims

| Place of search | Date of completion of the search | Examiner |
|---|---|---|
| Munich | 29 October 2021 | Baudino, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 17 8853

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2021

| Patent document cited in search report | Publication date | Patent family member(s) | Publication date |
|---|---|---|---|
| EP 3748551 A1 | 09-12-2020 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3748551 A